# EUROPEAN PATENT APPLICATION

(11) **EP 0 791 568 A1**
(43) Date of publication of application: **27.08.1997**
(21) Application number: 97301143.0
(22) Date of filing: 21.02.1997
(51) Int. Cl.: C05F 17/02

(54) **Method and device for disposing organic waste**

(30) Priority: 23.02.1996 JP 61801/96
(71) Applicant: JAPAN GORE-TEX, INC., Setagaya-ku Tokyo-To 156 (JP)
(72) Inventor: Oga, Takahiro, Tsukubo-Gun, Okayama-Ken 719-11 (JP)
(74) Representative: McCallum, William Potter

(57) **Abstract**

An organic waste disposal device includes an inner container for housing organic waste, the inner container having a wall with a portion (8,19) of the wall being in contact with the organic waste. The portion of the wall is fabricated from water-repellent, water-vapor-permeable material. The device further includes an external container (2,15,21) for enclosing the inner container, the external container having a wall with an inlet (4,23) formed therein for introducing air into a gap (9,16) between the inner and external containers, and an outlet (5,25) formed therein for discharging the air introduced into the gap. In this regard, a fan in fluid communication with the gap draws air into the gap and removes air and moisture from the gap. A method for dehydration or microbial treatment of organic waste is further disclosed.

## Description

The present invention relates to a method and device for the disposal of organic waste.

So-called organic waste is produced in households, restaurants, hotels, and the like. Such organic waste contains large amounts of moisture and produces an unpleasant odor, making its treatment extremely disagreeable to those individuals tasked to treat it, and its transportation for disposal quite difficult. Dehydration, microbial treatment, and other such methods for the treatment of organic waste at the site where it is actually produced, such as households and restaurants, have thus been proposed.

For the purposes of treatment efficiency, such treatment of organic waste should allow the moisture contained in the organic waste to be rapidly and economically eliminated, but none of the conventional methods proposed for the disposal of organic waste have yet to satisfy such requirements. In conventional methods, the organic waste is commonly heated, and the moisture contained in the waste is evaporated into the air over the organic waste, but the rate at which the moisture is removed in these heating methods is still inadequate.

In the method disclosed in Japanese Laid-Open Patent Application 5-32301, highly saturated combustible waste material is sealed in a bag or container, at least part of which is formed of a porous film, and the moisture inside escapes through the porous film to the outside during storage or transport. Although the moisture can be readily removed in this method, the moisture is removed at a slow rate.

The foregoing illustrates limitations known to exist in present methods and containers for disposing organic waste. Thus, it is apparent that it would be advantageous to provide a means for overcoming one or more of the limitations set forth above. Accordingly, a suitable alternative is provided including features more fully disclosed hereinafter.

According to the present invention, there is provided an organic waste disposal device for the dehydration or microbial treatment of organic waste, said organic waste disposal device comprising:
an inner container for housing organic waste, said container having a wall with a portion of the wall being in contact with the organic waste, said portion of the wall being fabricated from water-repellent, water-vapor-permeable material; and
an external container for enclosing the inner container, said external container having a wall having an inlet formed therein for introducing air into a gap between the inner and external containers, and an outlet formed therein for discharging the air introduced into the gap.

According to a further aspect of the present invention, there is provided an organic waste disposal device for the dehydration or microbial treatment of organic waste, said organic waste disposal device comprising a container for housing organic waste, said container having a wall with a portion of the wall being in contact with the organic waste, said portion of the wall being fabricated from water-repellent, water-vapor-permeable material, said water-repellent, water-vapor-permeable container wall portion consisting of a sealed envelope made of a water-repellent, water-vapor-permeable material, said envelope having an inlet for introducing air and an outlet for discharging the air that has been introduced into the envelope.

According to yet another aspect of the present invention, there is provided a method for treating organic waste in a container of the type comprising a wall having a portion thereof fabricated from water-repellent, water-vapor-permeable material, and an air guiding member spaced outwardly from the wall so that there is a gap between the wall of the container and the guiding member, said method comprising the steps of:
(a) disposing organic waste in the container so that said portion of the container wall having the water-repellent, water-vapor-permeable material is in contact with the organic waste;
(b) allowing moisture contained in the organic waste to permeate through said portion of the container having the water-repellent, water-vapour-permeable material into the gap between the wall of the container and the guiding member;
(c) allowing air to move into the gap via an inlet formed in the guide member; and
(d) allowing the removal of air and moisture from the gap via an outlet formed in the guide member.

An object of the present invention, which is a method for the dehydration or microbial treatment of organic waste, is to offer a method for the rapid and economical elimination of the moisture contained in organic waste, as well as to offer an organic waste disposal device having such a rapid moisture-eliminating capacity.

Embodiments of the present invention will now be described, by way of example, with reference to the accompanying drawings, in which:-
Figure 1 is a schematic elevational view of an organic waste disposal device of the present invention;
Figure 2 is a schematic elevational view of an organic waste disposal device of another preferred embodiment;
Figure 3 is a perspective view of an organic waste disposal device of yet another preferred embodiment;
Figure 4 is a side elevational view of the device shown in Figure 3;
Figure 5 is a rear elevational view of the device shown in Figure 3; and
Figure 6 is a perspective view of a dehydration mechanism of the device shown in Figure 3.

The organic waste referred to in the present specification includes: waste that primarily contains feed residue, such as carbohydrates or proteins, produced in households, restaurants, hotels, and the like; organic waste occurring in the process of microbial treatment, which is produced during the microbial treatment of such waste; and mixtures containing such types of organic waste, such as the product of the microbial treatment of organic waste and the treated material when organic waste is microbially treated in fungal beds.

In this regard, the dehydration of organic waste includes methods for eliminating the moisture contained in the various aforementioned types of organic waste. The microbial treatment of organic waste includes methods in which organic waste is digested or composted in the presence of microbes or fungal beds containing microbes.

The water-repellent, water-vapor-permeable material referred to in the present specification means a material that essentially inhibits the penetration of water but allows water vapor to pass through. The shad of such material is not limited and can be made in the form of a film, sheet, plate, container, or the like. The shape is selected as desired according to the conditions under which the material is used.

At least the part of the container wall that is in contact with the organic waste, or the container wall in its entirety, of the container used in the present invention is formed into a water-repellent, water-vapor-permeable container wall. The water-repellent, water-vapor-permeable container wall is formed of a water-repellent, water-vapor-permeable material. Various types of such materials are well known. Such water-repellent, water-vapor-permeable materials are described below.

### (1) Porous hydrophobic polymer materials

Examples of hydrophobic polymers include polyolefin resins such as polyethylene and polypropylene, and fluoropolymers such as polytetrafluoroethylene (PTFE). Porous sheets or membranes of synthetic polymers, for example, polyethylene, polypropylene, or fluoropolymers, and the like, can be used. Fluoropolymers, including tetrafluoroethylene/(perfluoroalkyl) vinyl ether copolymer (PFA), tetrafluoroethylene/hexafluoropropylene copolymer (FEP), and polytetrafluoroethylene (PTFE), and the like, are preferred for their inherent hydrophobicity, chemical inertness, processing characteristics, and temperature resistance. Most preferred are porous membranes of polytetrafluoroethylene.

Porous polytetrafluoroethylene sheet or film suitable for use in the invention can be made by processes known in the art, for example, by stretching or drawing processes, by papermaking processes, by processes in which filler materials are incorporated with the PTFE resin which are subsequently removed to leave a porous structure, or by powder sintering processes. Preferably the porous polytetrafluoroethylene film is porous expanded polytetrafluoroethylene film having a structure of interconnected nodes and fibrils, as described in U.S. Patent Nos. 3,953,566 and 4,187,390 which describe the preferred material and processes for making them. The porous polytetrafluoroethylene film [comprised in the water-repellent. water-vapor-permeable material] should have a thickness in the range 5 to 500 micrometers, preferably in the range 10 to 200 micrometers; a pore volume in the range 20 to 95 percent, preferably in the range 50 to 90 percent; and a nominal pore size in the range 0.05 to 30 micrometers, preferably in the range 0.1 to 10 micrometers. To prevent penetration by external bacteria, such as putrefying bacteria or mold spores, a nominal pore size of no more than 1 micrometer is preferred

### (2) Other porous materials treated with a water-repellent polymer.

The type of porous material used is not particularly limited so long as the porous material has suitable porosity, strength and fabricability. Knitted, woven, non-woven, and mesh cloth, fabrics, or other forms of metal or polymer fibers can be used. Even porous sintered metals, glass frits, or glass cloth can be used. For the most part, however, for considerations such as cost, weight, and processability, porous polymeric materials are preferred. Examples include hydrocarbon-based polymers, such as polyethylene, polypropylene, and polystyrene; fluoropolymers, such as polytetrafluoroethylene and polyvinylidene fluoride; hydrophilic polymers, such as polyvinyl alcohol, as well as polyvinyl chloride, polyamides and polyesters.

The size of the pores in this porous polymer material should ordinarily range from an average pore diameter of 0.05 to 30 micrometers, and preferably 0.1 to 10 micrometers. To completely prevent penetration by external bacteria, a size of no more than 1 micrometer is preferred. The pore volume of the porous polymer material ranges between 10 and 95 percent, and preferably between 50 and 90 percent. The material should be at least 5 micrometers, and preferably 10 to 200 micrometers, thick.

Regardless of the initial wetting characteristics of the material, oil- and water-repellency can be imparted or enhanced by treating the porous polymer material with an oleophobic coating material in a manner such that the porosity of the porous polymer material is substantially maintained, for example, by the materials and methods disclosed in U.S. Patents No. 5,116,650 and No. 5,523,346, and others.

To cause a water-repellent polymer to adhere to the surface defining the pores of the porous polymer material, a water-repellent polymer-containing solution or microemulsion can be applied by conventional methods such as by immersion, painting, spraying, roll coating, or the like to the surface of the porous polymer material, and then heated to dry it.

To determine the level of water-repellency of a material, contact angle measurements are frequently used. When a droplet of water forms a contact angle of 90 degrees or more on a flat surface, the surface is considered to be hydrophobic, i.e. water-repellent. An angle of contact (with water) of at least 95 degrees, and preferably at least 108 degrees, should be obtained when measuring the water repellency of a surface of a material treated with water-repellent polymer

Fluoropolymers expressed by the following structural formulas can be used as the water-repellent polymer.
(i) Polymers containing cyclic structures expressed by the following General Formula 1 and/or 2 as repeating units. 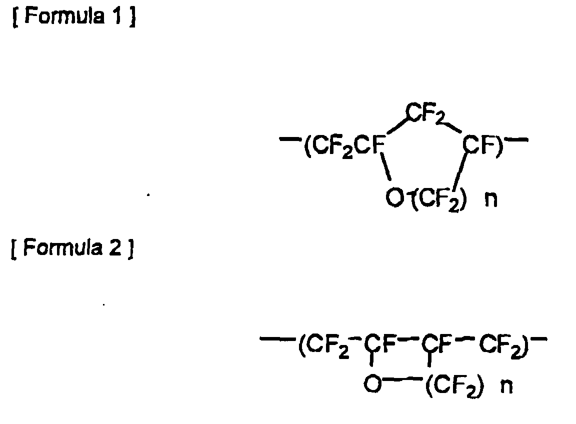 (where n is 1 or 2)
(ii) Polymers containing cyclic structures expressed by the following General Formula 3 and/or 4. 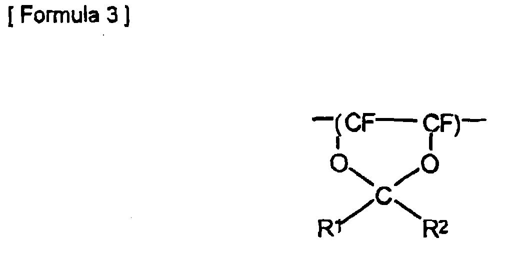 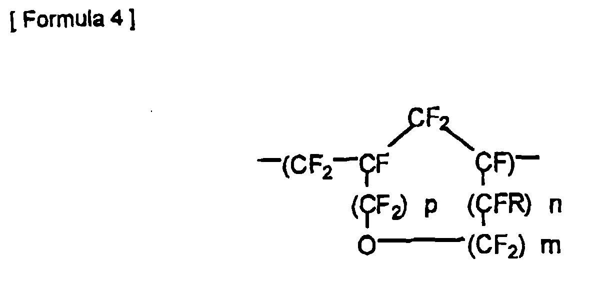 (where R¹, and R² are F or CF₃; p is a number from 0 to 5; m is a number from 0 to 4; and n is a number from 0 to 1, although p+m+n is a number ranging from 1 and 6)
(iii) Polymers containing cyclic structures expressed by the following General Formula 5 as repeating units. 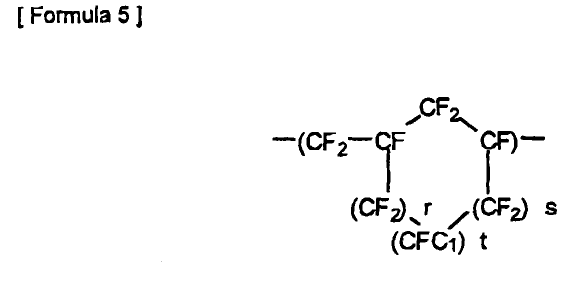 (where r, s, and t each represent a number from 0 and 5, although r + s + t is a number ranging from 1 to 6)

The aforementioned water repellent fluoropolymers may be dissolved in an inert solvent such as Fluorinert™ (by 3M Corp.) and used in the form of a solution. This solution is applied to the porous material as described hereinabove and is dried so as to affix the water repellent fluoropolymer in the form of a thin film on the surfaces defining the pores so as to substantially maintain the porosity of the material.

In the present invention, polymers derived from polymerizable compounds having fluorine-containing groups as side chains can be used as the water repellent fluoropolymer. Examples include polymers of acrylates or methacrylates having fluorine-containing groups in the side chains. Acrylates expressed by the following Formula 6 can be used in particular.

### [Formula 6]

CF₃(CF₂)n―C₂H₄-OCOCR=CH₂

(where R is H or CH₃, and n is a number from 3 to 13)

Copolymers containing tetrafluoroethylene, such as tetrafluoroethylene/hexafluoropropylene copolymers, can also be used as the water repellent polymer in the present invention. Such a water repellent fluoropolymer is described in detail in U.S. Patent No. 5,523,346 (to Wu).

All of the aforementioned water repellent polymers may be used in the form of aqueous emulsions (average emulsion particle diameter: 0.001 to 0.1 micrometers). Such aqueous emulsions have small emulsion particles and can thus be applied to the porous material by impregnation, spraying, or the like. After it has been applied, the material can be heated to fuse the water repellent polymer and affix it in the form of a thin film on the inner structure defining the pores of the porous material so as to substantially maintain its porosity.

Even when the porous polymer is a drawn porous material consisting of water-repellent polytetrafluoroethylene, the water repellent fluoropolymer is affixed to the surface on the inside of the pores of the porous material, allowing greater water repellency to be brought about.

Affixing a water-repellent polymer to the internal surfaces defining the pores of the porous material results in water repellency, essentially allowing liquid water to be prevented from penetrating, but permitting bulk flow of gases so that gases such as air, carbon dioxide, and water vapor can pass through.

### (3) Non-porous Hydrophilic Water-Vapor-Permeable Polymer Materials

Such water-vapor-permeable polymer sheet or films should have a water vapor permeability, as determined by JIS L 1099-B, of at least 400 g/M²/·day, and preferably at least 5,000 g/M²/·day. Such water-vapor-permeable polymers generally have hydrophilic groups such as hydroxyl groups, carboxyl groups, sulfonic acid groups, and amino groups in the molecule, swell in water, and are water-insoluble. The following polymers can be used, for example.
(i) Silicone resins
   Hydrophilic Silicone resins consist of organopolysiloxanes and can thus generally be used.
(ii) Polyurethane
   Well known hydrophilic polyurethanes in forms such as urethane foam, urethane elastomers, urethane paint resins, and urethane resin adhesives are examples.
(iii) Thermoplastic ion exchange resins
   These resins are polymers containing sulfonic acid groups or carboxyl groups in the molecule. Desirable examples contain the repeating units expressed by the following Formula 7. 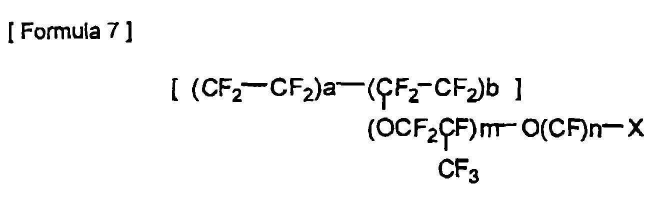 (where X is S0₃H or COOH, m is a number from 0 to 1, and n is a number from 1 to 5)
(iv) Other at least partially cross-linked polyvinyl alcohols, cellulose acetate, cellulose nitrate, polyamino acids and other such hydrophilic polymers and hydrophilic fluororesins.

The water-repellent, water-vapor-permeable material can be laminated to and supported by a reinforcing layer material, such as porous plastic film, perforated metal or metal nets, nonwoven polymeric fabrics or mesh, or fabrics woven or knitted using fibers such as synthetic polymer fibers, carbon fibers, or glass fibers. The water-repellent, water-vapor-permeable material can also be sandwiched between reinforcing layers. A well known bonding method such as heat fusion or one involving the use of an adhesive can be employed to adhere the water-vapor-permeable material to the reinforcing layer. When an adhesive method is used for lamination, a non-continuous layer of adhesive should be employed so as to avoid blocking the water vapor permeability, A non-continuous layer of adhesive is used herein to indicate a layer of adhesive which is applied to a surface so as to not form a non-porous continuous film. For example, a layer applied to a surface as a pattern of discrete dots, a porous non-woven web or mesh, or the like. The adhesive may be selected from many known in the art. The adhesive can be a thermoplastic, thermosetting, or reaction curing type, in liquid or solid form, selected from the classes including, but not limited to, polyamides, polyacrylamides, polyesters, polyolefins, polyurethanes, silicones, and the like. Suitable application means include gravure printing, spray coating, powder coating, and the like. The use of urethane-based or silicone-based adhesives is preferred.

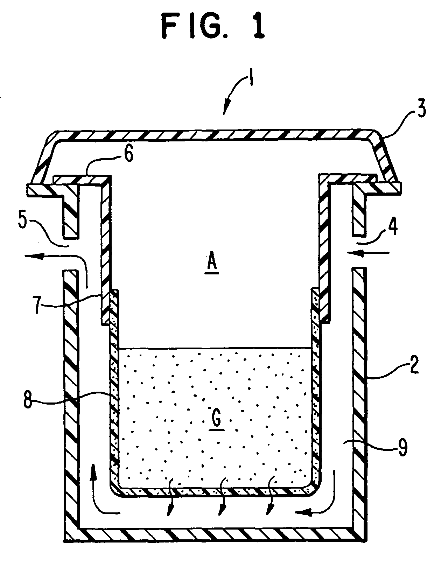

The present invention is described in greater detail below with reference to Figures 1-6.

Figure 1 is a schematic of an example of the organic waste disposal device pertaining to the present invention. In Figure 1, 1 is the organic waste disposal device, 2 is the outer container or shell, 3 is a lid, 4 is an inlet for introducing air, 5 is an outlet for discharging air, 6 is the inner container, 7 is a water-repellent, moisture-impermeable upper container-portion, 8 is a water-repellent, water-vapor-permeable lower container-portion, 9 is an air passageway between the inner container and shell, and G is the layer of organic waste with which the container has been loaded.

In the device illustrated in Figure 1, the outer container 2, the lid 3, and the upper container-portion 7 are made of a rigid plastic or metal plate, or the like and are non-porous and are gas- and liquid-impermeable. The water-repellent, moisture-permeable lower container-portion 8 is constructed of the aforementioned water-repellent, water-vapor-permeable material. The lower container-portion 8 is connected by any convenient means to the bottom end of the upper container-portion 7 so as to form the interior container 6 as a whole.

To dehydrate the organic waste using the organic waste disposal device shown in Figure 1, the interior container 6 is charged with organic waste, air is introduced through the air introduction inlet 4, and air is discharged from the air discharge outlet 5. The air can be introduced and discharged using an air fan or suction fan. The air introduced through the air introduction inlet 4 flows through the air passageway 9 formed between the outer surface of the inner container 6 and the outer container 2 (serving as an air guiding member that surrounds the interior container) and is discharged through the air discharge outlet 5.

When the air is thus allowed to flow through the air passageway 9, moisture contained in the organic waste G evaporates in the form of water vapor through the water-repellent, water-vapor-permeable container-portion 8 into the air passageway 9. This water vapor is discharged out of the device along with air flowing through the interior of the air passageway 9.

In the device shown in Figure 1, the moisture (water vapor) evaporating from the organic waste into the air passageway is smoothly discharged to the outside along with the flow of air, allowing moisture to be rapidly eliminated from the organic waste.

The device shown in Figure 1 can also be equipped with an agitator for agitating the organic waste or a heater for heating the organic waste. Agitating or heating the organic waste allows an even higher rate to be achieved in eliminating the moisture from the organic waste. When the organic waste is heated, a temperature of around 30 to 50°C is suitable. The air flowing through the inside of the air passageway 9 can also be heated. The heating temperature in this case may range from 30 to 150°C, and preferably 50 to 80°C. The air should flow at a linear speed of 3 cm/min or more, and preferably about 0.1 to 1.5 m/minute.

The lid 3 may also be provided with an air introduction inlet and air discharge outlet as needed. This allows water vapor in the space A inside the organic waste disposal device to be discharged to the outside.

In Figure 1, the water-repellent, water-vapor-permeable container 8 is formed entirely of a water-repellent, water-vapor-permeable material, but it need not necessarily be so constructed. Numerous holes or perforations can be provided in a container-shaped support material of plastic or metal, and the water-repellent, water-vapor-permeable material can be affixed to the inner surface of the container-shaped support provided with numerous holes or perforations. This structure can be provided to increase the mechanical strength of the water-repellent, water-vapor-permeable container. The water-repellent, water-vapor-permeable container 8 can be removably attached by conventional means to the bottom end of the water-repellent, moisture-impermeable container 7, allowing the water-repellent, water-vapor-permeable container 8 to be readily replaced as needed.

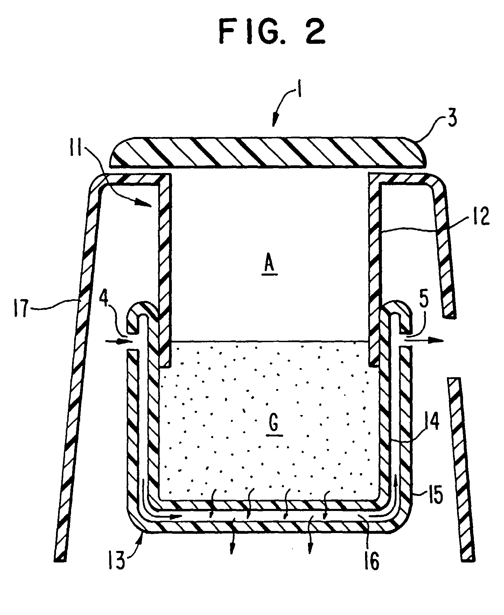

Figure 2 is a schematic of another example of the waste disposal device pertaining to the present invention. In this Figure, 1 is the organic waste disposal device, 3 is the lid, 4 is the air introduction inlet, 5 is the air discharge outlet, 11 is a container, 12 is the upper container-portion, 13 is the water-repellent, water-vapor-permeable lower container-portion, 14 and 15 are water-repellent, water-vapor-permeable materials, 16 is the air passageway, and 17 is a container support.

In Figure 2, the lid 3, the water-repellent, moisture-impermeable container 12, and the container support 17 are each made of a rigid plastic or metal plate, or the like. The water-repellent, water-vapor-permeable container 13 is a sealed envelope consisting of a sheet of a water-repellent, water-vapor-permeable material formed into the shape of a container. In Figure 2, 14 indicates the water-repellent, water-vapor-permeable material forming the inside of the envelope 13, and 15 indicates the water-repellent, water-vapor-permeable material forming the outside of the envelope. Reference numeral 16 indicates a gap (air flow duct) formed between the water-repellent, water-vapor-permeable materials 14 and 15. The outside water-repellent water-vapor-permeable material 15 acts as an air guide member, and is provided with an air introduction inlet 4 and air discharge outlet 5.

Unlike the inside water-repellent, water-vapor-permeable material 14, the outside water-repellent, water-vapor-permeable material 15 can also be made of non-porous gas- and liquid-impermeable material.

The distance across the gap 16 is 0.2 to 10 mm, and preferably 1 to 5 mm. To maintain the distance across this gap, a plurality of rod-like elements of plastic with a suitable diameter can be attached as spacers on the inside surface of either the water-repellent water-vapor-permeable material 14 or 15 in the same general direction as the direction in which the air flows, so that the air flow will not be obstructed. Alternatively, other air-channel-forming material such as knitted, woven, or non-woven cloth or mesh may also be inserted into the gap, or the water-repellent water-vapor-permeable materials 14 and 15 may be laminated to the air-channel-forming materials in a manner such that water-vapor transmission or air flow is not obstructed.

The container support 17 prevents the container 11 from overturning, and can take a variety of shapes such as tubes, rods, or plates.

To dehydrate the organic waste using the organic, waste disposal device depicted in Figure 2, the container 11 is charged with organic waste, air is introduced through the air introduction inlet 4, and the air is discharged through the air discharge outlet 5. The air can be introduced and discharged using an air fan or suction fan. The air introduced from the air introduction inlet 4 flows through the air passageway 16 and is discharged from the air discharge outlet 5.

When the air is thus allowed to flow through the air passageway 16, moisture contained in the organic waste G evaporates in the form of water vapor through the water-repellent, water-vapor-permeable material 14 on the inside of the water-repellent, air permeable container 13 into the air passageway 16. This water vapor is discharged out of the device along with air flowing through the interior of the air passageway 16.

In the device shown in Figure 2, the moisture (water vapor) evaporating from the organic waste into the air passageway 16 is smoothly discharged to the outside along with the flow of air, allowing moisture to be rapidly eliminated from the organic waste.

The devices shown in Figures 1 and 2 are ideal as devices for the dehydration of organic waste, but they can also be used as devices for the microbial treatment of organic waste. When they are used as such devices for the microbial treatment of organic waste, microbes should be mixed into the organic waste with which the container is filled, or the container should be previously charged with a fungal bed containing microbes, and the organic waste should be placed on the fungal bed and agitated. In this case, too, moisture in the organic waste and moisture produced by the microbial treatment of the organic waste can be rapidly discharged out of the device. Vapors such as carbon dioxide, ammonia, and amines produced by the microbial treatment of the organic waste can similarly be discharged out of the device. When microbial treatment is undertaken, the microbes can be added after the container is filled with the organic waste, and the contents can be agitated, or the container can be filled with a fungal bed containing microbes, and the organic waste can be placed on the fungal bed layer for microbial treatment. The oxygen needed for microbial treatment can be supplied by the air flowing inside the air passageway 9 or 16 as described above.

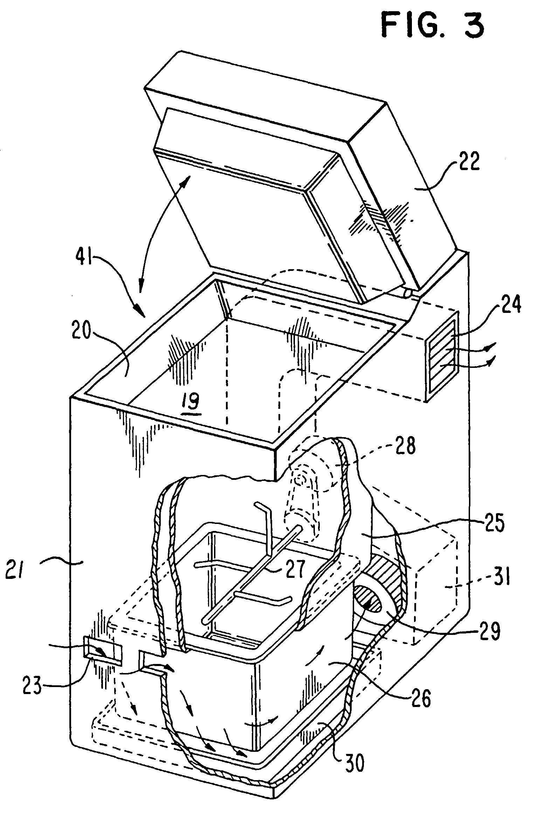

Figure 3 is an illustration of the structure of a device used in the microbial treatment of organic waste.

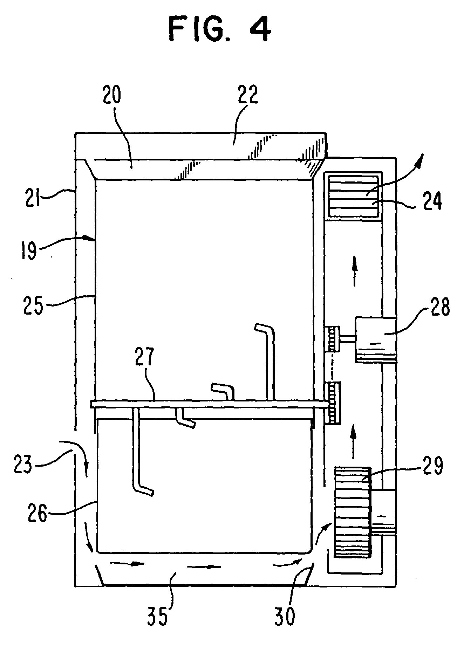

Figure 4 is a side view of the device shown in Figure 3.

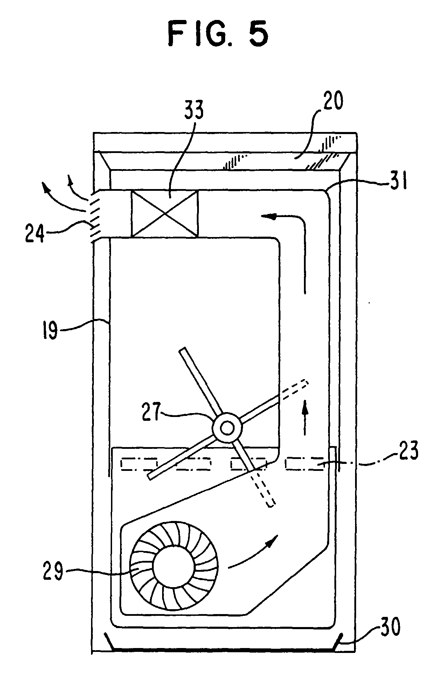

Figure 5 is a back view of the device shown in Figure 3.

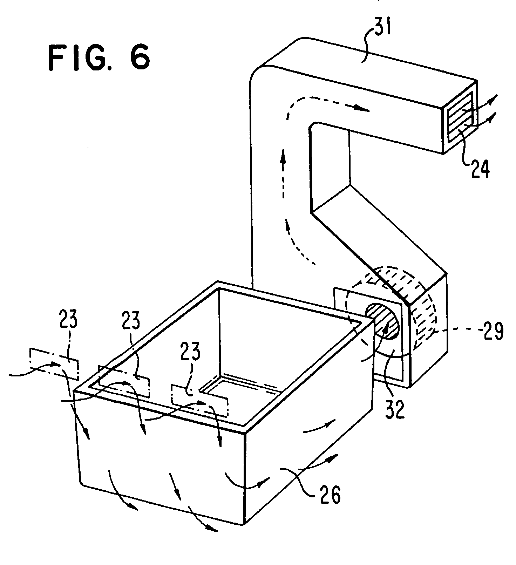

Figure 6 is an illustration of the dehydration mechanism of the device shown in Figure 3.

In Figures 3-6, 19 is the inner container, 21 is the outer container, 22 is the lid, 23 is the air introduction inlet, 24 is the air discharge outlet, 25 is the upper container-portion of the inner container, 26 is the lower water-repellent, water-vapor-permeable container-portion of the internal container, 27 is an agitator, 28 is a motor, 29 is a fan, 30 is a condensing water dish, 31 is an air duct, 32 is an air suction port, and 33 is a deodorizer.

In the device shown in Figure 3, the top end of the interior container 19 is suspended from a support plate 20 attached to the upper end of the inner wall of the external container 21.

The water-repellent, moisture-permeable container 26 is formed by bonding a water-repellent, water-vapor-permeable film to the inside wall surface of a plastic container having numerous through-holes or perforations.

In this device, when the fan 29 rotates, outside air is drawn through the air introduction inlet 23 into the device. This air flows through the gap between the outer peripheral surface of the water-repellent, water-vapor-permeable container 26 and the inner surface of the surrounding wall of the external container 21 as well as through the gap between the outer surface of the bottom of the container 26 and the condensing water dish 30. The air then flows through the air suction port 32 into the air duct 31, and is discharged outside the device from the air discharge outlet 24.

When organic waste is microbially treated using the device shown in Figure 3, the water-repellent, water-vapor-permeable container 26 is charged with a fungal bed containing microbes, and the organic waste is placed on the fungal bed.

The lid 22 is then closed, and the fan 29 and motor 28 are actuated. Outside air is thus introduced from the air introduction inlet 23 into the device and is discharged from the air discharge outlet 24, and the organic waste and fungal bed are agitated and mixed by the agitator 27 to bring about the microbial treatment of the organic waste.

The moisture in the organic waste and the moisture produced by the microbial degradation are evaporated out of the device through the container walls of the water-repellent, water-vapor-permeable lower container-portion 26. The moisture (water vapor) evaporating out of the container travels along with the air introduced from the air introduction inlet 23 into the device and is discharged to the outside from the air discharge outlet 24.

Gas substances such as the amines, ammonia, and carbon dioxide produced by the microbial degradation of the organic waste are similarly evaporated out of the lower container-portion 26 and are discharged to the outside along with the air from the air discharge outlet 24. The use of aerobic bacteria as the microbes for use in treating the organic waste is preferred in the interests of preventing foul odors. When foul odors caused by ammonia, amines, or the like are produced because of temporary anaerobic conditions in parts of the fungal bed, the foul odor may be eliminated by the deodorizer 33 mounted on the inside of the air passageway.

The deodorizer 33 is obtained by packing an air-permeable container with a deodorizing agent having action in eliminating ammonia or amines. Examples of well known deodorizers include activated charcoal and zeolites.

When the organic waste undergoes microbial treatment as described above, the moisture contained in the organic waste, the moisture produced by the microbial degradation of the organic waste, and other components (such as carbon dioxide, ammonia, and amines) are rapidly eliminated from the container and out of the device, allowing the microbial treatment of the organic waste to proceed smoothly.

### Practical Examples

The present invention is described in further detail below with reference to practical examples.

### Example 1 - Preparation of a water repellent coating material

In this example, 1000 g deionized water, 70 g fluoroacrylate (Zonyl TA-N, by Dupont), and 130 g ammonium perfluorooctanoate (Fluororad FC-143, by 3M) as a surfactant were added to a reactor. The mixture was a transparent microemulsion at 50°C and was agitated at about 1200 rpm. The reactor was then placed under a vacuum, and was purged three times with tetrafluoroethylene gas to keep the oxygen content of the mixture below 30 ppm. The mixture was then heated to and maintained at about 90°C. A gas mixture of tetrafluoroethylene and hexafluoropropylene was introduced into the reactor, and the pressure in the reactor was brought to around 1500 kPa. The molar ratio of hexafluoropropylene to tetrafluoroethylene at this time was about 70:30. Next, 0.4 g ammonium persulfate dissolved in 40 g water was pumped into the reactor to initiate the reaction. The reaction continued for about 234 minutes and was brought to conclusion. The reactor pressure at the conclusion of the reaction was about 600 kPa.

The colloid mixture produced in the above reaction was a transparent dispersion. The content of the fluorine-containing polymer (tetrafluoroethylene/hexafluoropropylene fluoroacrylate copolymer) was about 8.4 wt%. The average particle diameter of the polymer was about 445 nanometers (0.045 micrometers). Thermogravimetric analysis revealed components with an abundance of fluoroacrylate (about 70 wt% polymer particles) and components with an abundance of tetrafluoroethylene (about 30 wt%). This was based on the fact that 70 wt% polymer was decomposed at a temperature of 323 to 460°C (typical decomposing temperature of polyfluoroacrylate), and the fact that 30 wt% polymer was decomposed at a temperature of 460 to 710°C (typical decomposition temperature of polytetrafluoroethylene). Scanning differential calorimetry revealed that the polymer had three primary endothermic peaks at 124°C, 235°C, and 305°C.

### Example 2

An opening 160 x 260 mm was provided in the bottom of a box-shaped container (internal volume: 20 L: length: 200 mm; width: 400 mm; height: 250 mm) with a plastic sealing lid. An envelope-shaped water-repellent, water-vapor-permeable material A was attached to cover this opening, and the opening was sealed.

The aforementioned envelope-shaped water-repellent, water-vapor-permeable material A was manufactured in the following manner.

A drawn, porous polytetrafluoroethylene (PTFE) film with a pore diameter of 0.2 micrometers, thickness of 40 micrometers, and pore volume of 80% was immersed in a solution of the aqueous latex obtained in Example 1 diluted 3-fold with distilled water, it was taken out, the excess liquid was allowed to drip off, and the film was heated for 3 minutes in a 225°C oven. This heat treatment allowed the surfactant and water adhering to the film to be removed, and allowed the fluorine-containing solid polymer adhering to the film to fuse, so that it adhered in the form of a thin film on the structure defining the pores of the film so as to substantially maintain the porosity of the film.

Next, two sheets obtained by laminating the drawn porous PTFE film (treated with the water-repellent fluoropolymer) to a nonwoven fabric were placed on top of each other (with the nonwoven fabric on the inside), and the edges were fused to form a sealed envelope. A through hole was made at one end of the sheet facing the outside of the container and a vinyl chloride tube with an inside diameter of 4 mm and an outside diameter of 6 mm was joined to the through hole to form an air introduction inlet. A through hole 6 mm in diameter was similarly made at the end on the other side of the sheet to fashion an air discharge outlet. A diaphragm type of air pump to force air at controlled rates through the envelope was connected to the air introduction inlet.

At this point, 8 L water was then charged into the aforementioned container, a ceramic heater was placed in the water, the lid was closed, the contents were heated to 30, 40, or 50°C, air was allowed to flow inside the envelope-shaped water-repellent water-vapor-permeable material A at a pump flow rate of 1 L/min or 5 L/min, and the amount of moisture evaporating at each temperature was checked. The results are shown in Table 1.

### Comparative Example 1

A test was conducted in the same manner as in the practical examples except that the air flow rate was zero.

### Comparative Example 2

The test was carried out in the same manner as in Practical Example 1 except that a container with no opening in the bottom was used, and in the lid, a 160 x 260 mm opening was formed. A single sheet of the aforementioned water-repellent water-vapor-permeable sheet was attached to cover and seal the opening. The results are shown in Table 1.

**[Table 1]**

| No. | Air Flow Rate (L/min) | Amount of moisture evaporating (g/hr) | | |
|---|---|---|---|---|
| | | 30°C | 40°C | 50°C |
| Comp Ex. 1 | 0 | 4.6 | 13.4 | 20.1 |
| Ex. 2 | 1.0 | 6.5 | 16.4 | 23.8 |
| Ex. 2 | 5.0 | 8.7 | 20.5 | 29.1 |
| Comp. Ex. 2 | - | 2.3 | 7.4 | 10.6 |

The present invention allows moisture present inside the container to be rapidly evaporated off in the form of water vapor out of the container. The rate at which the moisture is eliminated is at least 150 g/m² hr, and usually between 200 and 700 g/m² hr. The present invention also allows moisture adhering to organic waste to be rapidly eliminated during the dehydration of such organic waste. The present invention also allows excess moisture in the container to be rapidly taken out of the container during microbial treatment of organic waste.

As can be seen from the above data, and unlike waste treatment containers known in the art exemplified by Comparative Example 2, positioning the water-vapor-permeable material in close proximity to the decomposing waste greatly increases the rate at which moisture is removed from the container. By so positioning the water-vapor-permeable material the water vapor diffusion path from the moisture source to the water-vapor-permeable material is minimized, as is the moisture concentration gradient. Additionally, the heat of decomposition of the organic waste and/or supplied heat is better utilised to increase the driving force for water vapor transmission across the water-vapor-permeable material.

In addition, oxygen necessary for the microbial treatment of organic waste can be smoothly supplied into the container through the container walls directly into the decomposing organic waste which can increase the rate of decomposition and reduce generation of unpleasant odors by providing aerobic decomposition conditions.

Although a few exemplary embodiments of the present invention have been described in detail above, those skilled in the art readily appreciate that many modifications are possible without materially departing from the navel teachings and advantages which are described herein. Accordingly, all such modifications are intended to be included within the scope of the present invention, as defined by the following claims.

## Claims

1. An organic waste disposal device for the dehydration or microbial treatment of organic waste, said organic waste disposal device comprising:
an inner container for housing organic waste, said container having a wall with a portion of the wall being in contact with the organic waste, said portion of the wall being fabricated from water-repellent, water-vapor-permeable material; and
an external container for enclosing the inner container, said external container having a wall having an inlet formed therein for introducing air into a gap between the inner and external containers, and an outlet formed therein for discharging the air introduced into the gap.

2. An organic waste disposal device for the dehydration or microbial treatment of organic waste, said organic waste disposal device comprising a container for housing organic waste, said container having a wall with a portion of the wall being in contact with the organic waste, said portion of the wall being fabricated from water-repellent, water-vapor-permeable material, said water-repellent, water-vapor-permeable container wall portion consisting of a sealed envelope made of a water-repellent, water-vapor-permeable material, said envelope having an inlet for introducing air and an outlet for discharging the air that has been introduced into the envelope.

3. An organic waste disposal device as set forth in claim 1 or 2 further comprising an agitator for agitating the organic waste disposed within the container.

4. An organic waste disposal device as set forth in any of claims 1 to 3, further comprising a heater for heating the organic waste disposed within the container.

5. An organic waste disposal device as set forth in any preceeding claim, further comprising a fan in fluid communication with the device for drawing air into the device and removing air and moisture from the device.

6. A method for treating organic waste in a container of the type comprising a wall having a portion thereof fabricated from water-repellent, water-vapor-permeable material, and an air guiding member spaced outwardly from the wall so that there is a gap between the wall of the container and the guiding member, said method comprising the steps of:
(a) disposing organic waste in the container so that said portion of the container wall having the water-repellent, water-vapor-permeable material is in contact with the organic waste;
(b) allowing moisture contained in the organic waste to permeate through said portion of the container having the water-repellent, water-vapour-permeable material into the gap between the wall of the container and the guiding member;
(c) allowing air to move into the gap via an inlet formed in the guide member; and
(d) allowing the removal of air and moisture from the gap via an outlet formed in the guide member.

7. A method as set forth in claim 6, further comprising the step of agitating the organic waste disposed within the container.

8. A method as set forth in claims 6 or 7, further comprising the step of heating the organic waste disposed within the container.

9. A method as set forth in any of claims 6 to 8, said step of allowing air to move into the gap comprising the steps of moving air into the inlet and removing air and moisture from the outlet.
